# EUROPEAN PATENT APPLICATION

(11) **EP 4 462 624 A1**
(43) Date of publication of application: **13.11.2024**
(21) Application number: 22928192.8
(22) Date of filing: 20.09.2022
(51) Int. Cl.: H02J 1/10

(54) **ENERGY STORAGE APPARATUS AND POWER SUPPLY SYSTEM**

(30) Priority: 23.02.2022 CN 202210169388
(71) Applicant: Huawei Digital Power Technologies Co., Ltd., Shenzhen, Guangdong 518043 (CN)
(72) Inventor: SHU, Zhou, Shenzhen, 518043 (CN)
(74) Representative: Isarpatent
(86) International application number: PCT/CN2022/119975
(87) International publication number: WO 2023/159926

(57) **Abstract**

This application provides an energy storage apparatus and a power supply system. The energy storage apparatus includes an energy storage unit and a conversion unit. The conversion unit may be configured to: obtain a given port voltage of the conversion unit based on running information of the energy storage unit, control a real-time port voltage of the conversion unit based on the given port voltage of the conversion unit, and control a real-time port current of the energy storage unit based on the given port voltage and the real-time port voltage of the conversion unit. The energy storage unit may be configured to be discharged or charged based on the real-time port current of the energy storage unit. In this application, a correspondence between a real-time capacity or a state of charge of the energy storage unit and a port voltage of the conversion unit may be used to implement flexible replacement and parallel running of different types of energy storage apparatuses, thereby improving flexibility and reliability of the power supply system.

## Description

This application claims priority to Chinese Patent Application No. 202210169388.2, filed with the China National Intellectual Property Administration on February 23, 2022 and entitled "ENERGY STORAGE APPARATUS AND POWER SUPPLY SYSTEM", which is incorporated herein by reference in its entirety.

### TECHNICAL FIELD

This application relates to the field of energy technologies, and more specifically, to an energy storage apparatus and a power supply system.

### BACKGROUND

To implement flexible power supply to a load (for example, an alternating current load or a direct current load), an energy storage apparatus is widely used. The energy storage apparatus usually includes an energy storage unit (a lithium battery, a lead-acid battery, or the like) and a conversion unit (such as a direct current/direct current converter). Because external characteristics (reflected in real-time capacities, states of charge, or the like of energy storage units) of different types of energy storage apparatuses differ greatly, in the conventional technology, neither replacement of different types of energy storage apparatuses can be implemented, nor parallel running of different types of energy storage units can be implemented. Consequently, flexibility and reliability of the energy storage apparatus in a system are relatively low.

Therefore, an energy storage apparatus that is applicable to different types of energy storage units and that has high reliability is urgently needed.

### SUMMARY

This application provides an energy storage apparatus and a power supply system. A conversion unit may obtain a given port voltage of the conversion unit based on running information of an energy storage unit, control a real-time port voltage of the conversion unit based on the given port voltage of the conversion unit, and implement charging or discharging of the energy storage unit based on the given port voltage and the real-time port voltage of the conversion unit. This not only implements parallel running of different types of energy storage units, but also imposes no limitation on types of the energy storage units, so that an energy storage unit whose life expires can be replaced as required, thereby improving flexibility and reliability of the energy storage apparatus.

According to a first aspect, this application provides an energy storage apparatus, where the energy storage apparatus may include an energy storage unit and a conversion unit.

The energy storage unit may include a first direct current end and a second direct current end, and the conversion unit may include a third direct current end, a fourth direct current end, a fifth direct current end, and a sixth direct current end.

Optionally, the first direct current end may be connected to the third direct current end, the second direct current end may be connected to the fourth direct current end, and the fifth direct current end and the sixth direct current end may be connected to a power supply apparatus.

Based on the foregoing connection relationships, the following may be obtained.

The conversion unit may be configured to: obtain a given port voltage of the conversion unit based on running information of the energy storage unit and a real-time port current of the energy storage unit, or based on the running information of the energy storage unit and a real-time port current of the conversion unit; and is further configured to: control a real-time port voltage of the conversion unit based on the given port voltage of the conversion unit, and control the real-time port current of the energy storage unit based on the given port voltage of the conversion unit and the real-time port voltage of the conversion unit.

The real-time port current of the energy storage unit may indicate a real-time current of the first direct current end or the second direct current end, the real-time port current of the conversion unit may indicate a real-time current of the fifth direct current end or the sixth direct current end, and the real-time port voltage of the conversion unit may indicate a real-time voltage between the fifth direct current end and the sixth direct current end.

It should be noted that, when the energy storage unit is charged, the real-time port current of the energy storage unit may indicate a charge current of the energy storage unit. When the energy storage unit is discharged, the real-time port current of the energy storage unit may indicate a discharge current of the energy storage unit.

In this case, the energy storage unit may be configured to be charged or discharged based on the real-time port current of the energy storage unit.

In this embodiment of this application, the given port voltage of the conversion unit may be obtained based on the running information of the energy storage unit. The real-time port voltage of the conversion unit may be controlled based on the given port voltage of the conversion unit. The energy storage unit may be charged or discharged based on the given port voltage and the real-time port voltage of the conversion unit. This not only implements parallel running of different types of energy storage units, but also imposes no limitation on types of the energy storage units, so that an energy storage unit whose life expires can be replaced as required, thereby improving flexibility and reliability of the energy storage apparatus.

In other words, in this application, the real-time port voltage of the conversion unit may be controlled based on real-time capacities or states of charge of different types of energy storage units, and an energy storage unit whose life expires may be replaced with any type of energy storage unit, to ensure normal working of the energy storage apparatus.

In a possible implementation, the conversion unit may include an obtaining unit, a control unit, and a conversion circuit.

Optionally, the obtaining unit may be configured to: obtain the running information of the energy storage unit, and obtain the real-time port current of the energy storage unit.

For example, the obtaining unit may obtain the real-time port current of the energy storage unit from the first direct current end or the second direct current end, or obtain the real-time port current of the conversion unit from the fifth direct current end or the sixth direct current end.

The obtaining unit may be further configured to: obtain the given port voltage of the conversion unit based on the running information of the energy storage unit and the real-time port current of the energy storage unit, or obtain the given port voltage of the conversion unit based on the running information of the energy storage unit and the real-time port current of the conversion unit.

The control unit may be configured to obtain a drive signal based on the real-time port current of the energy storage unit, the given port voltage of the conversion unit, and the real-time port voltage of the conversion unit.

The conversion circuit may be configured to control the real-time port voltage of the conversion unit based on the drive signal.

In a possible implementation, the obtaining unit may be configured to: obtain a first given port voltage of the conversion unit based on the running information of the energy storage unit; obtain a second given port voltage of the conversion unit based on the real-time port current of the energy storage unit or the real-time port current of the conversion unit; and obtain the given port voltage of the conversion unit by using an addition operation based on the first given port voltage of the conversion unit and the second given port voltage of the conversion unit.

Optionally, the running information of the energy storage unit may include a real-time capacity of the energy storage unit or a state of charge of the energy storage unit.

Further, the obtaining unit may be configured to: obtain the first given port voltage of the conversion unit based on the real-time capacity of the energy storage unit and a first correspondence (the first correspondence may indicate a correspondence between the real-time capacity of the energy storage unit and the first given port voltage of the conversion unit); or obtain the first given port voltage of the conversion unit based on the state of charge of the energy storage unit and a second correspondence (the second correspondence may indicate a correspondence between the state of charge of the energy storage unit and the first given port voltage of the conversion unit).

It can be learned that the obtaining unit may not only obtain the first given port voltage of the conversion unit based on the real-time capacity of the energy storage unit, but also obtain the first given port voltage of the conversion unit based on the state of charge of the energy storage unit. Certainly, the obtaining unit may alternatively obtain the first given port voltage of the conversion unit in another manner. This is not limited in this application.

In another possible implementation, the obtaining unit may be configured to: obtain the second given port voltage of the conversion unit by using a multiplication operation based on the real-time port current of the energy storage unit and a preset first control coefficient; or obtain the second given port voltage of the conversion unit by using the multiplication operation based on the real-time port current of the conversion unit and a preset second control coefficient.

It can be learned that the obtaining unit may not only obtain the second given port voltage of the conversion unit based on the real-time port current of the energy storage unit, but also obtain the second given port voltage of the conversion unit based on the real-time port current of the conversion unit. Certainly, the obtaining unit may alternatively obtain the second given port voltage of the conversion unit in another manner. This is not limited in this application.

In a possible implementation, the control unit may be configured to: obtain the real-time port voltage of the conversion unit from the fifth direct current end and the sixth direct current end; input a difference between the given port voltage of the conversion unit and the real-time port voltage of the conversion unit into a voltage control loop, to obtain a given port current of the energy storage unit; input a difference between the given port current of the energy storage unit and the real-time port current of the energy storage unit into a current control loop, to obtain the drive signal; and send the drive signal to the conversion circuit to drive the conversion circuit (which may be a power transistor in the conversion circuit).

For example, the control unit may be configured to set an upper limit of the given port current of the energy storage unit and a lower limit of the given port current of the energy storage unit.

In other words, a current value of the given port current of the energy storage unit may be any current value between the upper limit of the given port current of the energy storage unit and the lower limit of the given port current of the energy storage unit. Therefore, current-limiting charging or discharging of the energy storage unit can be implemented.

In a possible implementation, the conversion circuit may include an inductor, a first power transistor, a second power transistor, and a capacitor.

Optionally, a first end of the inductor may be connected to the third direct current end, and a second end of the inductor may be connected to a first node. A second electrode of the first power transistor and a first electrode of the second power transistor may be separately connected to the first node, a first electrode of the first power transistor and a first end of the capacitor may be separately connected to the fifth direct current end, a second electrode of the second power transistor may be connected to the fourth direct current end, a second end of the capacitor may be connected to the sixth direct current end, and the fourth direct current end may be connected to the sixth direct current end.

It should be noted that, in addition to the foregoing topology structure, the conversion circuit may alternatively use another topology structure. This is not limited in this application.

Because the first power transistor and the second power transistor need to be controlled by a control unit, a control electrode of the first power transistor and a control electrode of the second power transistor may be separately connected to an output end of the control unit. The control unit may send a drive command to the first power transistor and the second power transistor through the output end, to implement turn-on or turn-off of the first power transistor and the second power transistor.

Further, the first power transistor may be any one of an insulated gate bipolar transistor, an insulated gate field effect transistor, and a triode.

Similarly, the second power transistor is any one of an insulated gate bipolar transistor, an insulated gate field effect transistor, and a triode.

Certainly, the first power transistor and the second power transistor may alternatively be other power transistors. This is not limited in this application.

In a possible implementation, the energy storage unit may be a lead-acid battery or a lithium battery. Certainly, the energy storage unit may alternatively be another type of battery. This is not limited in this application.

According to a second aspect, this application provides a power supply system, where the power supply system may include a power supply apparatus and a plurality of energy storage apparatuses provided in the first aspect and the possible implementations of the first aspect. The plurality of energy storage apparatuses are connected in parallel, and then may be connected to a first end of the power supply apparatus, a second end of the power supply apparatus may be connected to a load, and a third end of the power supply apparatus may be connected to an alternating current power supply.

Optionally, the power supply apparatus may be configured to: convert a real-time port voltage of the conversion unit into a voltage required by the load, and transmit the voltage to the load (implementing power supply to the load); or convert an alternating current output by the alternating current power supply into a direct current, and transmit the direct current to each of the energy storage apparatuses (implementing charging of the energy storage apparatus). The power supply apparatus may be further configured to convert the real-time port voltage of the conversion unit into an alternating current voltage, and transmit the alternating current voltage to the alternating current power supply.

Each of the energy storage apparatuses may be further configured to be charged based on a real-time port current of the energy storage unit and the direct current.

It should be understood that the technical solution in the second aspect of this application is consistent with the technical solution in the first aspect of this application. Beneficial effects achieved in the aspects and the corresponding feasible implementations are similar, and details are not described again.

### BRIEF DESCRIPTION OF DRAWINGS

To describe the technical solutions in this application or in the conventional technology more clearly, the following briefly describes the accompanying drawings used for describing embodiments or the conventional technology. Clearly, the accompanying drawings in the following description show some embodiments of this application, and a person of ordinary skill in the art may still derive other drawings from these accompanying drawings without inventive efforts.
FIG. 1 is a schematic diagram of a structure of an energy storage apparatus according to an embodiment of this application;
FIG. 2 is a schematic diagram of a structure of an energy storage apparatus according to an embodiment of this application;
FIG. 3 is a schematic diagram of a structure of a conversion unit according to an embodiment of this application;
FIG. 4 is a schematic curve diagram of a first correspondence according to an embodiment of this application;
FIG. 5 is a schematic curve diagram of a second correspondence according to an embodiment of this application;
FIG. 6 is a schematic diagram of a structure of a conversion circuit according to an embodiment of this application;
FIG. 7 is a schematic diagram of a real-time port voltage of a conversion unit according to an embodiment of this application;
FIG. 8 is a schematic diagram of a structure of a power supply system according to an embodiment of this application; and
FIG. 9 is a schematic diagram of states of charge and discharge currents of different energy storage apparatuses in a discharging process according to an embodiment of this application.

### DESCRIPTION OF EMBODIMENTS

The following describes technical solutions of this application with reference to accompanying drawings.

To make objectives, technical solutions, and advantages of this application clearer, the following clearly and completely describes technical solutions in this application with reference to the accompanying drawings in this application. Clearly, described embodiments are merely some but not all of embodiments of this application. Based on embodiments of this application, all other embodiments obtained by a person of ordinary skill in the art without inventive efforts fall within the scope of protection of this application.

In embodiments of the specification, claims, and the accompanying drawings of this application, the terms "first", "second", and the like are merely intended for distinguishing and description, and shall not be understood as an indication or implication of relative importance or an indication or implication of an order. Moreover, the terms "include", "have" and any variants thereof are intended to cover the non-exclusive inclusion, for example, inclusion of a series of steps or units. A method, a system, a product, or a device is not necessarily limited to clearly listed steps or units, but may include other steps or units that are not clearly listed and that are inherent to processes, the method, the product, or the device.

It should be understood that, in this application, "at least one" means one or more, and "a plurality of" means two or more. The term "and/or" describes an association relationship between associated objects, and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following" or a similar expression thereof indicates any combination of the following, including any combination of one or more of the following. For example, at least one of a, b, or c may indicate: a, b, c, "a and b", "a and c", "b and c", or "a, b, and c", where a, b, and c may be singular or plural.

To implement flexible power supply to a load, an energy storage apparatus is widely used. The energy storage apparatus may usually include a conversion unit (such as a direct current/direct current converter) and an energy storage unit (a lithium battery, a lead-acid battery, or the like). In the conventional technology, the conversion unit usually cannot simulate external characteristics of different types of energy storage units. In this case, an energy storage unit whose life expires cannot be replaced. For example, a lead-acid battery whose life expires can only be replaced with a new lead-acid battery, and cannot be replaced with a lithium battery. Consequently, reliability of the energy storage apparatus is relatively low.

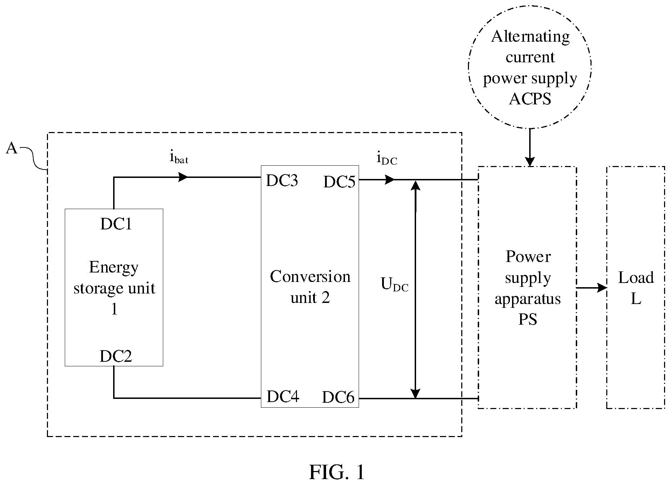

To improve reliability of the energy storage apparatus, an embodiment of this application provides an energy storage apparatus, as shown in FIG. 1. An energy storage apparatus A may include an energy storage unit 1 and a conversion unit 2.

The energy storage unit 1 may include a direct current end DC1 (that is, a first direct current end, which may be a positive end of the energy storage unit 1) and a direct current end DC2 (that is, a second direct current end, which may be a negative end of the energy storage unit 1). The energy storage unit 1 may be charged or discharged through the direct current end DC1 and the direct current end DC2. The conversion unit 2 may include a direct current end DC3 (that is, a third direct current end), a direct current end DC4 (that is, a fourth direct current end), a direct current end DC5 (that is, a fifth direct current end), and a direct current end DC6 (that is, a sixth direct current end).

Optionally, the direct current end DC1 may be connected to the direct current end DC3, and the direct current end DC2 may be connected to the direct current end DC4, to implement a connection between the energy storage unit 1 and the conversion unit 2. The direct current end DC5 and the direct current end DC6 may be connected to a power supply apparatus PS, and the power supply apparatus PS may further be connected to an alternating current power supply (alternating current power supply, ACPS) and a load L.

When the power supply apparatus PS is externally connected to the alternating current power supply ACPS, the power supply apparatus PS may obtain an alternating current voltage from the alternating current power supply ACPS, convert the alternating current voltage into a direct current voltage, and transmit the direct current voltage to the energy storage unit 1, to implement charging of the energy storage unit 1. When the energy storage unit 1 is charged, the direct current end DC5 and the direct current end DC6 constitute input ends of the conversion unit 2, and the direct current end DC3 and the direct current end DC4 constitute output ends of the conversion unit 2.

Similarly, the conversion unit 2 may also obtain a real-time port voltage (which may be a direct current voltage) of the energy storage unit 1, convert (for example, boost or buck) the real-time port voltage of the energy storage unit 1 into a real-time port voltage (which may be a direct current voltage) of the conversion unit 2, and transmit the real-time port voltage of the conversion unit 2 to the load L. The energy storage unit 1 is discharged to supply power to the load L. When the energy storage unit 1 is discharged, the direct current end DC3 and the direct current end DC4 constitute input ends of the conversion unit 2, and the direct current end DC5 and the direct current end DC6 constitute output ends of the conversion unit 2.

Based on the foregoing connection relationships, the following may be further obtained.

The conversion unit 2 may be configured to obtain a given port voltage (which may be represented by Uₛₑₜ) of the conversion unit 2 based on running information (for example, a real-time capacity or a state of charge (state of charge, SOC)) of the energy storage unit 1 and a real-time port current (which may be represented by i_{bat}) of the energy storage unit 1, or based on the running information of the energy storage unit 1 and a real-time port current (which may be represented by i_{DC}) of the conversion unit 2; and may be further configured to: control a real-time port voltage (which may be represented by U_{DC}) of the conversion unit based on the given port voltage Uₛₑₜ of the conversion unit 2, and control the real-time port current i_{bat} of the energy storage unit based on the given port voltage Uₛₑₜ of the conversion unit and the real-time port voltage U_{DC} of the conversion unit.

The energy storage unit 1 may be configured to be charged or discharged based on the real-time port current i_{bat} of the energy storage unit 1.

It should be noted that, when the energy storage unit 1 is charged, the real-time port current i_{bat} of the energy storage unit 1 indicates a charge current of the energy storage unit 1, and the charge current flows from the conversion unit 2 to the energy storage unit 1.

When the energy storage unit 1 is discharged, the real-time port current i_{bat} of the energy storage unit 1 indicates a discharge current of the energy storage unit 1, and the discharge current flows from the energy storage unit 1 to the conversion unit 2.

The real-time port current i_{bat} of the energy storage unit 1 may indicate a real-time current of the direct current end DC1 or the direct current end DC2, and the real-time port current i_{DC} of the conversion unit 2 may indicate a real-time current of the direct current end

DC5 or the direct current end DC6. The real-time port voltage U_{DC} of the conversion unit 2 may indicate a real-time voltage between the direct current end DC5 and the direct current end DC6.

It should be explained that, in FIG. 1, i_{bat} indicates the discharge current of the energy storage unit 1, i_{DC} indicates the real-time current of the direct current end DC5, and U_{DC} indicates the real-time voltage between the direct current end DC5 and the direct current end DC6.

It may be considered that, when the given port voltage Uₛₑₜ of the conversion unit 2 is greater than the real-time port voltage U_{DC} of the conversion unit, the energy storage unit 1 is discharged based on the real-time port current i_{bat} (that is, the discharge current) of the energy storage unit. On the contrary, when the given port voltage Uₛₑₜ of the conversion unit 2 is less than the real-time port voltage U_{DC} of the conversion unit, the energy storage unit 1 is charged based on the real-time port current i_{bat} (that is, the charge current) of the energy storage unit.

Optionally, the energy storage unit 1 may be a lead-acid battery, a lithium battery, or the like. This is not limited in this embodiment of this application.

In this embodiment of this application, the given port voltage of the conversion unit may be obtained based on the running information of the energy storage unit. The real-time port voltage of the conversion unit may be controlled based on the given port voltage of the conversion unit. The energy storage unit may be charged or discharged based on the given port voltage and the real-time port voltage of the conversion unit. This not only implements parallel running of different types of energy storage units, but also imposes no limitation on types of the energy storage units, so that an energy storage unit whose life expires can be replaced as required, thereby improving flexibility and reliability of the energy storage apparatus.

In other words, in this embodiment of this application, the real-time port voltage of the conversion unit may be controlled based on real-time capacities or states of charge of different types of energy storage units, and an energy storage unit whose life expires may be replaced with any type of energy storage unit, to ensure normal working of the energy storage apparatus.

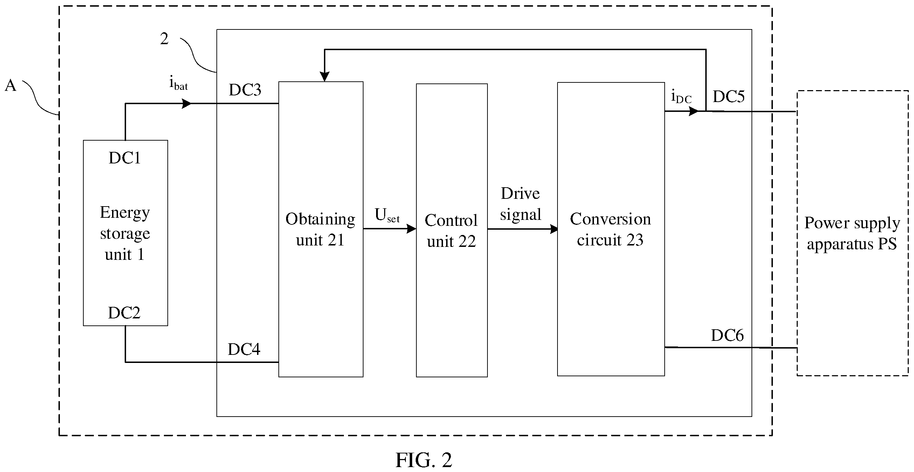

In a possible implementation, the conversion unit 2 may include an obtaining unit 21, a control unit 22, and a conversion circuit 23, as shown in FIG. 2. An output end of the obtaining unit 21 is connected to an input end of the control unit 22, and an output end of the control unit 22 is connected to a conversion circuit (to be specific, the output end may be connected to a power transistor in the conversion circuit, and refer to the following description).

Based on the foregoing connection relationships, the following may be further obtained.

The obtaining unit 21 may be configured to: obtain the running information (the real-time capacity or the state of charge SOC) of the energy storage unit 1; and obtain the real-time port current i_{bat} of the energy storage unit 1 from the direct current end DC1 (or the direct current end DC2), or obtain the real-time port current i_{DC} of the conversion unit 2 from the direct current end DC5 (or the direct current end DC6).

Further, the obtaining unit 21 may be further configured to: obtain the given port voltage Uₛₑₜ of the conversion unit based on the running information of the energy storage unit 1 and the real-time port current i_{bat} of the energy storage unit 1, or based on the running information of the energy storage unit 1 and the real-time port current i_{DC} of the conversion unit 2.

The control unit 22 may be configured to: control the real-time port voltage U_{DC} of the conversion unit based on the given port voltage Uₛₑₜ of the conversion unit, control the real-time port current i_{bat} of the energy storage unit based on the given port voltage Uₛₑₜ of the conversion unit and the real-time port voltage U_{DC} of the conversion unit, obtain a drive signal based on the real-time port current i_{bat} of the energy storage unit 1, the given port voltage Uₛₑₜ of the conversion unit 2, and the real-time port voltage of the conversion unit 2, and send the drive signal to the conversion circuit 23.

The conversion circuit 23 may be configured to control the real-time port voltage U_{DC} of the conversion unit 2 based on the drive signal (or under driving of the control unit 22).

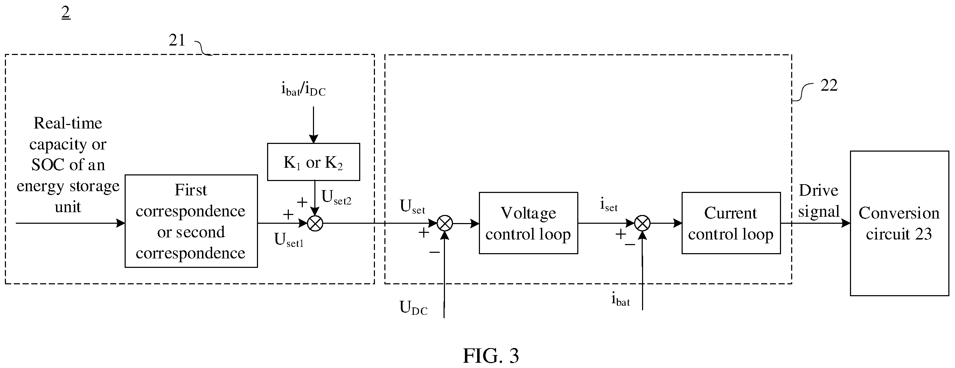

Further, as shown in FIG. 3, the obtaining unit 21 may be configured to:
obtain a first given port voltage (which may be represented by Uₛₑₜ₁) of the conversion unit 1 based on the running information of the energy storage unit 1;
obtain a second given port voltage (which may be represented by Uₛₑₜ₂) of the conversion unit 1 based on the real-time port current i_{bat} of the energy storage unit 1 or the real-time port current i_{DC} of the energy storage unit 1; and
obtain the given port voltage Uₛₑₜ of the conversion unit 2 by using an addition operation based on the first given port voltage Uₛₑₜ₁ of the conversion unit 2 and the second given port voltage Uₛₑₜ₂ of the conversion unit 2.

For example, as shown in FIG. 3, the first given port voltage Uₛₑₜ₁ of the conversion unit 2 and the second given port voltage Uₛₑₜ₂ of the conversion unit 2 may be superposed to obtain the given port voltage Uₛₑₜ of the conversion unit 2.

In a possible implementation, because the running information of the energy storage unit 1 may include the real-time capacity of the energy storage unit 1 or the state of charge of the energy storage unit 1, in an example, the obtaining unit 21 may be configured to:
with continued reference to FIG. 3, obtain the first given port voltage Uₛₑₜ₁ of the conversion unit 2 based on the real-time capacity of the energy storage unit 1 and based on a first correspondence. The first correspondence may indicate a correspondence between the real-time capacity of the energy storage unit 1 and the first given port voltage Uₛₑₜ₁ of the conversion unit 2.

In another example, the obtaining unit 21 may be configured to:
obtain the first given port voltage Uₛₑₜ₁ of the conversion unit 2 based on the state of charge SOC of the energy storage unit 1 and based on a second correspondence. The second correspondence may indicate a correspondence between the state of charge SOC of the energy storage unit 1 and the first given port voltage Uₛₑₜ₁ of the conversion unit 2.

Optionally, the real-time capacity of the energy storage unit 1 is positively correlated with the first given port voltage Uₛₑₜ₁ of the conversion unit 2, and the state of charge SOC of the energy storage unit 1 is positively correlated with the first given port voltage Uₛₑₜ₁ of the conversion unit 2. The first correspondence and the second correspondence may be separately in a form of a table, a curve, or the like.

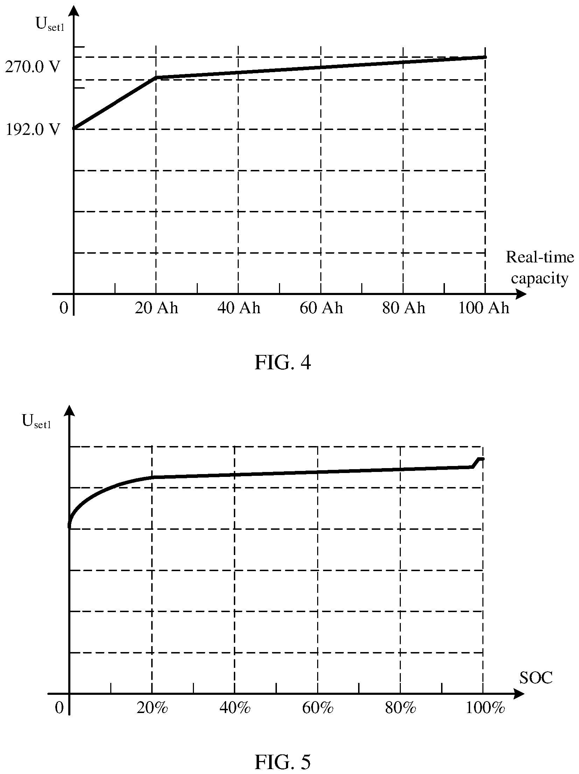

For example, the first correspondence and the second correspondence may use a piecewise linear curve shown in FIG. 4, or may use a curve that is shown in FIG. 5 and that simulates external characteristics of the energy storage unit (such as a lead-acid battery). Certainly, the first correspondence and the second correspondence may alternatively be in a form of another curve. This is not limited in this embodiment of this application.

It should be noted that, the first given port voltage Uₛₑₜ₁ of the conversion unit 2 may be determined in consideration of requirements of the energy storage apparatus on the real-time port voltage, a power, and efficiency of the conversion unit 2.

It can be learned that the obtaining unit may obtain the first given port voltage of the conversion unit based on the state of charge SOC or the real-time capacity of the energy storage unit and with reference to the correspondence. In other words, the first given port voltage of the conversion unit obtained by the obtaining unit is related to the state of charge SOC or the real-time capacity of the energy storage unit, and is irrelevant to a type of the energy storage unit. To be specific, the type of the energy storage unit is not limited. In this case, if an energy storage unit whose life expires is a lead-acid battery, the lead-acid battery may be replaced with a lithium battery (that is, another energy storage unit whose type is different from a type of the lead-acid battery), and the energy storage apparatus can work normally without communication between the power supply apparatus and the energy storage unit.

In conclusion, in this embodiment of this application, the correspondence between the real-time capacity or the state of charge of the energy storage unit and a port voltage of the conversion unit may be used to implement flexible replacement and parallel running of different types of energy storage apparatuses, thereby improving flexibility and reliability of a power supply system.

In a possible implementation, the obtaining unit 21 may be configured to:
with reference to FIG. 3, obtain the second given port voltage Uₛₑₜ₂ of the conversion unit 2 by using a multiplication operation based on the real-time port current i_{bat} of the energy storage unit 1 and a preset first control coefficient (which may be represented by K₁ and may be 0).

In another possible implementation, the obtaining unit 21 may be further configured to:
with reference to FIG. 3, obtain the second given port voltage Uₛₑₜ₂ of the conversion unit 2 by using a multiplication operation based on the real-time port current i_{DC} of the conversion unit 2 and a preset second control coefficient (which may be represented by K₂ and may be 0).

It should be noted that the obtaining unit 21 may alternatively obtain the second given port voltage Uₛₑₜ₂ in another manner. This is not limited in this embodiment of this application.

In a possible implementation, the control unit 22 may be connected to the direct current end DC5 and the direct current end DC6, and is configured to obtain the real-time port voltage U_{DC} of the conversion unit 2.

Further, as shown in FIG. 3, the control unit 22 may input a difference between the given port voltage Uₛₑₜ of the conversion unit 2 and the real-time port voltage U_{DC} of the conversion unit 2 into a voltage control loop, to obtain a given port current (which may be represented by iₛₑₜ) of the energy storage unit 1.

The control unit 22 may input a difference between the given port current iₛₑₜ of the energy storage unit and the real-time port current i_{bat} of the energy storage unit 1 into a current control loop, to obtain a drive signal.

The control unit 22 may send the drive signal to the conversion circuit 23, to drive the power transistor in the conversion circuit 23 to be turned on or turned off.

It can be learned that, the control unit 22 may control the real-time port voltage U_{DC} of the conversion unit based on the voltage control loop and through closed-loop feedback control. In addition, the control unit 22 may control the given port current iₛₑₜ of the energy storage unit based on the current control loop and through closed-loop feedback control.

Optionally, the control unit 22 may further set an upper limit (which may be represented by iₛₑₜₘₐₓ) of the given port current of the energy storage unit 1 and a lower limit (which may be represented by iₛₑₜₘᵢₙ) of the given port current of the energy storage unit 1.

In other words, the given port current iₛₑₜ of the energy storage unit 1 needs to be greater than or equal to the lower limit iₛₑₜₘᵢₙ of the given port current of the energy storage unit 1, and less than or equal to the upper limit iₛₑₜₘₐₓ of the given port current of the energy storage unit 1.

It should be explained that, if the energy storage unit 1 is charged, a charge current of the energy storage unit 1 may be limited based on the lower iₛₑₜₘᵢₙ of the given port current of the energy storage unit 1 and the upper limit iₛₑₜₘₐₓ of the given port current of the energy storage unit 1. Similarly, if the energy storage unit 1 is discharged, a discharge current of the energy storage unit 1 may be limited based on the lower iₛₑₜₘᵢₙ of the given port current of the energy storage unit 1 and the upper limit iₛₑₜₘₐₓ of the given port current of the energy storage unit 1. It may also be considered that a power of the energy storage unit may be limited based on the lower iₛₑₜₘᵢₙ of the given port current of the energy storage unit 1 and the upper limit iₛₑₜₘₐₓ of the given port current of the energy storage unit 1.

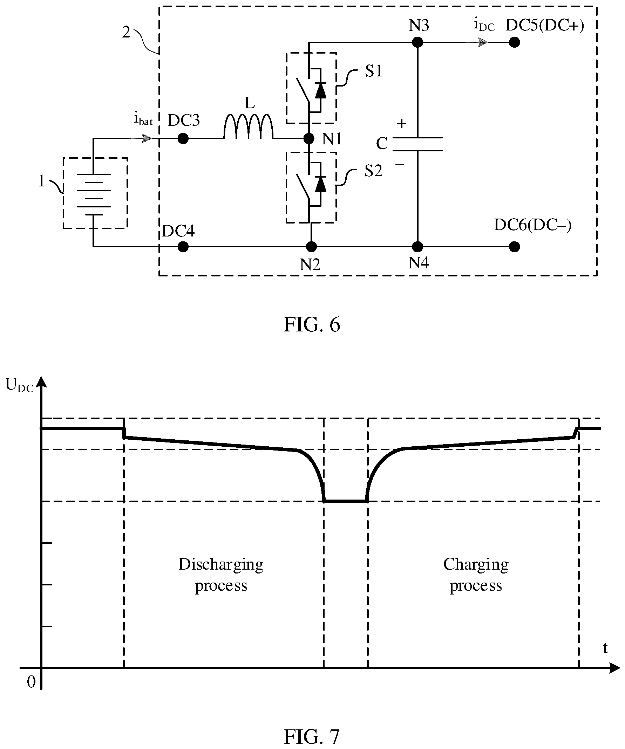

In a possible implementation, as shown in FIG. 6, the conversion circuit 23 may include an inductor L (which may implement a filtering function), a power transistor S1 (that is, a first power transistor), a power transistor S2 (that is, a second power transistor), and a capacitor C (which may implement a filtering function).

Optionally, a first end of the inductor L (that is, a left end of the inductor L in FIG. 6) may be connected to the direct current end DC3, and a second end (that is, a right end of the inductor L in FIG. 6) of the inductor L is connected to a node N1 (that is, a first node). A second electrode of the power transistor S 1 and a first electrode of the power transistor S2 may be separately connected to the node N1, and a first electrode of the power transistor S1 and a first end of the capacitor C (that is, an upper end of the capacitor C in FIG. 6, which may be a positive end) are separately connected to the direct current end DC5 (which may be a positive end DC+ of the conversion unit 2). A second electrode of the power transistor S2 may be connected to the direct current end DC4 through a node N2, and a second end of the capacitor C (that is, a lower end of the capacitor C in FIG. 6, which may be a negative end) may be connected to the direct current end DC6 (which may be a negative end DC- of the conversion unit 2) through a node N4. The direct current end DC4 is connected to the direct current end DC6 through the node N2 and the node N4.

For example, a control electrode of the power transistor S 1 and a control electrode of the power transistor S2 may be separately connected to the output end of the control unit 22. This is not shown in FIG. 6. The control unit 22 may send the drive signal to the control electrode of the power transistor S 1 and the control electrode of the power transistor S2, to implement turn-on and turn-off of the power transistor S1 and the power transistor S2.

It should be noted that, in addition to a topology structure shown in FIG. 6, the conversion circuit 23 may alternatively use another topology structure. This is not limited in this embodiment of this application.

In a possible implementation, the power transistor S1 may be any one of an insulated gate bipolar transistor (insulate-gate bipolar transistor, IGBT), an metal-oxide-semiconductor field-effect transistor (metal-oxide-semiconductor field-effect transistor, MOSFET), and a triode.

Similarly, the power transistor S2 may also be any one of an IGBT, an MOSFET, and a triode.

Certainly, the power transistor S1 and the power transistor S2 may alternatively be other types of power transistors. This is not limited in this embodiment of this application.

It can be learned that, in this embodiment of this application, the real-time port voltage U_{DC} of the conversion unit 2 may be controlled in a closed-loop feedback control manner.

For example, in a charging process and a discharging process of the energy storage unit 1, a schematic diagram of the real-time port voltage U_{DC} of the conversion unit 2 is shown in FIG. 7.

It can be learned from FIG. 7 that, in the discharging process of the energy storage unit 1, the real-time port voltage U_{DC} of the conversion unit 2 gradually decreases with time. In the charging process of the energy storage unit 1, the real-time port voltage U_{DC} of the conversion unit 2 gradually increases with time.

In an example, parameters that are of a lead-acid battery and that may be simulated by a lithium battery (that is, an energy storage unit) including 15 100 AH lithium battery cells connected in series may be shown in Table 1.

**Table 1**

| Capacity of a cell in a state of full charge | Quantity of lead-acid cells | Equalized charging voltage | Float charging voltage | Charging rate | Temperature compensation |
|---|---|---|---|---|---|
| 40 | 120 | 2.35 V/cell | 2.25 V/cell | 0.15 C | No |

It can be learned that, by simulating external characteristics of the lead-acid battery, the lead-acid battery whose life expires may be replaced with the lithium battery, and an energy storage apparatus including the lithium battery can work normally without communication between the power supply apparatus and the lithium battery.

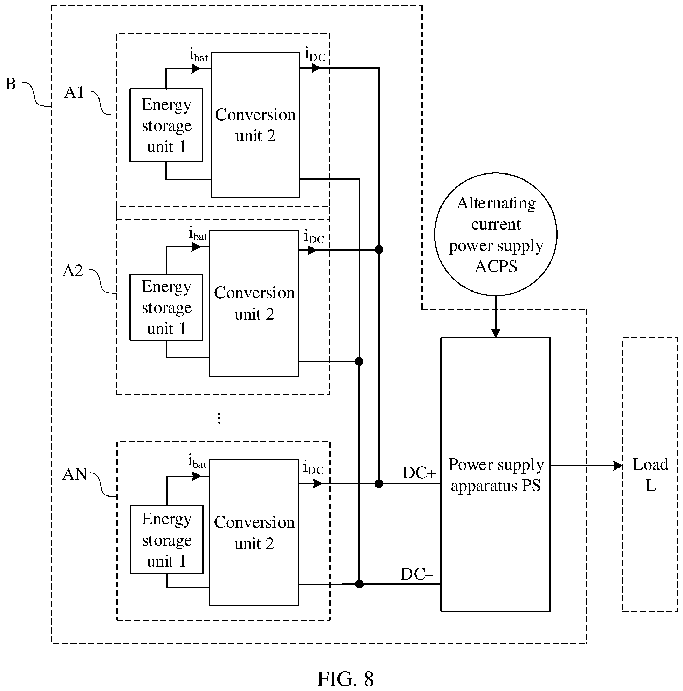

An embodiment of this application further provides a power supply system, as shown in FIG. 8. A power supply system B may include a power supply apparatus PS and N energy storage apparatuses (that is, an energy storage apparatus A1, an energy storage apparatus A2, ..., and an energy storage apparatus AN in FIG. 8). After parallel connection, the N energy storage apparatuses may be connected to a first end of the power supply apparatus PS (that is, a left end of the power supply apparatus PS in FIG. 8), a second end of the power supply apparatus PS (that is, a right end of the power supply apparatus PS in FIG. 8) may be connected to a load L, and a third end of the power supply apparatus PS (that is, an upper end of the power supply apparatus PS in FIG. 8) may be connected to an alternating current power supply ACPS.

Based on the foregoing connection relationships, the following may be further obtained.

The power supply apparatus PS may be configured to: convert a real-time port voltage U_{DC} (direct current voltage) of a conversion unit 2 in each energy storage apparatus into a voltage required by the load, and transmit the voltage to the load; or convert (that is, rectify) an alternating current output by the alternating current power supply ACPS into a direct current, and transmit the direct current to each energy storage apparatus. The power supply apparatus PS may be further configured to: convert the real-time port voltage U_{DC} (direct current voltage) of the conversion unit 2 into an alternating current voltage, and transmit the alternating current voltage to the alternating current power supply ACPS.

Each energy storage apparatus may be further configured to be charged based on a real-time port current i_{bat} of an energy storage unit 1 (that is, a charge current of the energy storage unit 1) and the direct current from the power supply apparatus PS.

It should be noted that, in a scenario in which the load is an alternating current load, the power supply apparatus PS converts (that is, inverts) the real-time port voltage U_{DC} of the conversion unit 2 in each energy storage apparatus into the alternating current, and provides the alternating current for the alternating current load, and the power supply apparatus PS implements an inversion function.

Similarly, in a scenario in which the load is a direct current load, the power supply apparatus PS converts (that is, boosts or bucks) the real-time port voltage U_{DC} of the conversion unit 2 in each energy storage apparatus into the direct current, and provides the direct current for the direct current load, and the power supply apparatus PS implements a voltage transformation function.

It should be further noted that, refer to the foregoing description for descriptions of the energy storage apparatus. Details are not described in this embodiment of this application.

It can be learned that, the N energy storage apparatuses in FIG. 8 are connected in parallel, so that running information (real-time capacities, states of charge, or the like) of energy storage units in different energy storage apparatuses can be automatically synchronized in a charging or discharging process of the energy storage units, thereby maximizing a backup time of the power supply system.

Optionally, in a process in which the plurality of energy storage units are charged, an energy storage unit with a small real-time capacity or a low state of charge is preferentially charged.

Similarly, in a process in which the plurality of energy storage units are discharged, an energy storage unit with a large real-time capacity or a high state of charge is preferentially discharged.

In addition, when states of charge of the plurality of energy storage units are the same, current equalization of the plurality of energy storage apparatuses connected in parallel may be implemented. To be specific, the plurality of energy storage apparatuses are charged with a same charge current, or discharged with a same discharge current.

In an example, the power supply system B may include the power supply apparatus PS and two energy storage apparatuses (that is, the energy storage apparatus A1 and the energy storage apparatus A2), and the energy storage apparatus A1 and the energy storage apparatus A2 are connected in parallel.

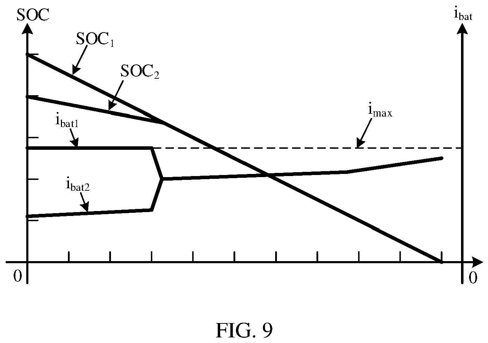

As shown in FIG. 9, iₘₐₓ represents a maximum discharge current value of the energy storage unit. In a process in which the energy storage apparatus A1 and the energy storage apparatus A2 are discharged separately, an initial state of charge of an energy storage unit 1 in the energy storage apparatus A1 is higher than an initial state of charge of an energy storage unit 2 in the energy storage apparatus A2 (that is, the initial state of charge of the energy storage unit 1 is different from the initial state of charge of the energy storage unit 2). However, a real-time state of charge of the energy storage unit 1 (that is, a SOC₁ in FIG. 9) and a real-time state of charge of the energy storage unit 2 (that is, a SOC₂ in FIG. 9) may synchronously reach an end of discharge (end of discharge, EOD) with the discharging process, to implement maximization of a backup time of the power supply system.

It can be further seen from FIG. 9 that an initial discharge current of the energy storage unit 1 is greater than an initial discharge current of the energy storage unit 2 (that is, the initial discharge current of the energy storage unit 1 is different from the initial discharge current of the energy storage unit 2). However, a real-time discharge current (that is, i_{bat1} in FIG. 9) of the energy storage unit 1 and a real-time discharge current (that is, i_{bat2} in FIG. 9) of the energy storage unit 2 may synchronously reach the end of discharge with the discharging process.

To implement precise control of the real-time port voltage U_{DC} of the conversion unit in each energy storage apparatus, a sum of allowed charging powers of all energy storage apparatuses may be greater than a charging power of the power supply apparatus, and a sum of allowed discharging powers of all the energy storage apparatuses may be greater than a discharging power of the power supply apparatus.

In the energy storage apparatus in this embodiment of this application, because a first type of energy storage unit (for example, a lithium battery) may be used to simulate external characteristics of a second type of energy storage unit (for example, a lead-acid battery), the power supply apparatus may control external characteristics of the first type of energy storage unit based on the external characteristics of the second type of energy storage unit, so that the first type of energy storage unit is used to replace the second type of energy storage unit whose life expires, thereby improving reliability of the energy storage apparatus.

In addition, the power supply apparatus does not need to communicate with different energy storage apparatuses, and the entire power supply system is decoupled and flexible, so that large-scale (that is, a large quantity of energy storage apparatuses, for example, 20 energy storage apparatuses) parallel connection can be implemented. In addition, the power supply apparatus may implement control of a backup time, a state of charge, and the like of an energy storage unit in each energy storage apparatus.

In the several embodiments provided in this application, it should be understood that the disclosed system and apparatus may be implemented in another manner. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read only memory (Read Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An energy storage apparatus, comprising an energy storage unit and a conversion unit, wherein
the energy storage unit comprises a first direct current end and a second direct current end, and the conversion unit comprises a third direct current end, a fourth direct current end, a fifth direct current end, and a sixth direct current end;
the first direct current end is connected to the third direct current end, the second direct current end is connected to the fourth direct current end, and the fifth direct current end and the sixth direct current end are connected to a power supply apparatus;
the conversion unit is configured to: obtain a given port voltage of the conversion unit based on running information of the energy storage unit and a real-time port current of the energy storage unit, or based on the running information of the energy storage unit and a real-time port current of the conversion unit; and is further configured to: control a real-time port voltage of the conversion unit based on the given port voltage of the conversion unit, and control the real-time port current of the energy storage unit based on the given port voltage of the conversion unit and the real-time port voltage of the conversion unit, wherein the real-time port current of the energy storage unit indicates a real-time current of the first direct current end or the second direct current end, the real-time port current of the conversion unit indicates a real-time current of the fifth direct current end or the sixth direct current end, and the real-time port voltage of the conversion unit indicates a real-time voltage between the fifth direct current end and the sixth direct current end; and
the energy storage unit is configured to be discharged or charged based on the real-time port current of the energy storage unit.

2. The energy storage apparatus according to claim 1, wherein the conversion unit comprises:
an obtaining unit, configured to: obtain the running information of the energy storage unit, obtain the real-time port current of the energy storage unit from the first direct current end or the second direct current end, or obtain the real-time port current of the conversion unit from the fifth direct current end or the sixth direct current end; and further configured to: obtain the given port voltage of the conversion unit based on the running information of the energy storage unit and the real-time port current of the energy storage unit, or based on the running information of the energy storage unit and the real-time port current of the conversion unit;
a control unit, configured to obtain a drive signal based on the real-time port current of the energy storage unit, the given port voltage of the conversion unit, and the real-time port voltage of the conversion unit; and
a conversion circuit, configured to control the real-time port voltage of the conversion unit based on the drive signal.

3. The energy storage apparatus according to claim 2, wherein the obtaining unit is configured to:
obtain a first given port voltage of the conversion unit based on the running information of the energy storage unit;
obtain a second given port voltage of the conversion unit based on the real-time port current of the energy storage unit or the real-time port current of the conversion unit; and
obtain the given port voltage of the conversion unit by using an addition operation based on the first given port voltage of the conversion unit and the second given port voltage of the conversion unit.

4. The energy storage apparatus according to claim 3, wherein the running information of the energy storage unit comprises a real-time capacity of the energy storage unit or a state of charge of the energy storage unit; and
the obtaining unit is configured to:
obtain the first given port voltage of the conversion unit based on the real-time capacity of the energy storage unit and a first correspondence, wherein the first correspondence indicates a correspondence between the real-time capacity of the energy storage unit and the first given port voltage of the conversion unit; or
obtain the first given port voltage of the conversion unit based on the state of charge of the energy storage unit and a second correspondence, wherein the second correspondence indicates a correspondence between the state of charge of the energy storage unit and the first given port voltage of the conversion unit.

5. The energy storage apparatus according to claim 3 or 4, wherein the obtaining unit is configured to:
obtain the second given port voltage of the conversion unit by using a multiplication operation based on the real-time port current of the energy storage unit and a preset first control coefficient; or
obtain the second given port voltage of the conversion unit by using the multiplication operation based on the real-time port current of the conversion unit and a preset second control coefficient.

6. The energy storage apparatus according to any one of claims 2 to 5, wherein the control unit is configured to:
obtain the real-time port voltage of the conversion unit from the fifth direct current end and the sixth direct current end;
input a difference between the given port voltage of the conversion unit and the real-time port voltage of the conversion unit into a voltage control loop, to obtain a given port current of the energy storage unit;
input a difference between the given port current of the energy storage unit and the real-time port current of the energy storage unit into a current control loop, to obtain the drive signal; and
send the drive signal to the conversion circuit.

7. The energy storage apparatus according to claim 6, wherein the control unit is further configured to:
set an upper limit of the given port current of the energy storage unit and a lower limit of the given port current of the energy storage unit.

8. The energy storage apparatus according to any one of claims 2 to 7, wherein the conversion circuit comprises an inductor, a first power transistor, a second power transistor, and a capacitor; and
a first end of the inductor is connected to the third direct current end, a second end of the inductor is connected to a first node, a second electrode of the first power transistor and a first electrode of the second power transistor are separately connected to the first node, a first electrode of the first power transistor and a first end of the capacitor are separately connected to the fifth direct current end, a second electrode of the second power transistor is connected to the fourth direct current end, a second end of the capacitor is connected to the sixth direct current end, and the fourth direct current end is connected to the sixth direct current end.

9. The energy storage apparatus according to claim 8, wherein a control electrode of the first power transistor and a control electrode of the second power transistor are separately connected to an output end of the control unit.

10. The energy storage apparatus according to claim 8 or 9, wherein the first power transistor is any one of an insulated gate bipolar transistor, an insulated gate field effect transistor, and a triode; and
the second power transistor is any one of an insulated gate bipolar transistor, an insulated gate field effect transistor, and a triode.

11. The energy storage apparatus according to any one of claims 1 to 10, wherein the energy storage unit is a lead-acid battery or a lithium battery.

12. A power supply system, comprising a power supply apparatus and a plurality of energy storage apparatuses according to any one of claims 1 to 11, wherein the plurality of energy storage apparatuses are connected in parallel, and then connected to a first end of the power supply apparatus, a second end of the power supply apparatus is connected to a load, and a third end of the power supply apparatus is connected to an alternating current power supply;
the power supply apparatus is configured to: convert a real-time port voltage of the conversion unit into a voltage required by the load, and transmit the voltage to the load; or convert an alternating current output by the alternating current power supply into a direct current, and transmit the direct current to each of the energy storage apparatuses; and is further configured to convert the real-time port voltage of the conversion unit into an alternating current voltage, and transmit the alternating current voltage to the alternating current power supply; and
each of the energy storage apparatuses is further configured to be charged based on a real-time port current of the energy storage unit and the direct current.
